# FASCICULE DE BREVET EUROPEEN

(11) **EP 1 152 918 B1**
(45) Date de publication et mention de la délivrance du brevet: **26.11.2003**
(21) Numéro de dépôt: 99964749.8
(22) Date de dépôt: 30.12.1999
(51) Int. Cl.: B60N 2/28, B60N 2/44, B64D 11/06, B62B 9/12

(54) **SIEGE POUR ENFANT, A DOSSIER REGLABLE EN LARGEUR**
KINDERSITZ MIT IN DER BREITE VERSTELLBARER RÜCKENLEHNE
CHILD SEAT WITH WIDTH-ADJUSTABLE BACK

(30) Priorité: 30.12.1998 FR 9816767
(43) Date de publication de la demande: 14.11.2001
(73) Titulaire: Ampafrance, 49309 Cholet Cédex (FR); Surot, Patrick, 49300 Cholet (FR)
(72) Inventeur: SUROT, Patrick, F-49300 Cholet (FR)
(74) Mandataire: Vidon, Patrice
(86) Numéro de dépôt international: FR9903325
(87) Numéro de publication internationale: WO00040433

(56) Documents cités:
- US-A- 5 098 157
- US-A- 5 384 946
- US-A- 5 584 532
- US-A- 5 645 317
- US-A- 5 810 436

## Description

Le domaine de l'invention est celui de la puériculture. Plus précisément, l'invention concerne les sièges, chaises, transats, fauteuils,... pour enfants, destinés à être utilisés pendant une période relativement importante de la vie d'un enfant (par rapport notamment à l'évolution de sa morphologie), et/ou par différents enfants.

L'invention s'applique notamment, mais non exclusivement, aux sièges auto, destinés à être installés dans un véhicule.

On connaît déjà, dans le domaine des sièges auto pour enfants, divers systèmes permettant de régler la largeur de l'embase, ou assise, d'un siège, afin de l'adapter à l'enfant transporté. Par exemple, une molette placée sur la face avant de l'assise peut permettre d'agir sur une crémaillère, ou un pas de vis, pour éloigner ou rapprocher les bords latéraux de l'assise. Un siège représentant l'état de la technique est connu par exemple du document US-A-5 645 317.

Cependant, cela n'est clairement pas suffisant pour que le siège soit parfaitement adapté à la morphologie de l'enfant, au fur et à mesure qu'il grandit et s'élargit. Notamment, il faut que la têtière, destinée à maintenir la tête de l'enfant, soit parfaitement placée. Une technique connue consiste à fixer cette têtière à l'aide de moyens de fixation amovibles (fixation par Velcro (marque déposée) par exemple). Toutefois, cette technique reste limitée à la hauteur maximale du dossier.

Par ailleurs, au fur et à mesure que l'enfant grandit, il s'élargit. En conséquence, la forme du dossier est rapidement inadaptée, en particulier lorsque l'on recherche un maintien ajusté (ce qui est notamment souhaitable dans le cas des sièges auto).

En d'autres termes, un problème important, tant pour le confort que pour la sécurité, est l'obtention de sièges présentant une évolutivité et une adaptabilité maximum.

A la connaissance des déposants, ce problème n'a jamais été pris en compte, en ce qui concerne le dossier des sièges destinés à des enfants. A tout le moins, aucune solution simple et efficace n'a été proposée pour ce problème.

L'invention a notamment pour objectif d'apporter une solution à ce problème, et de pallier les inconvénients des techniques antérieures.

Plus précisément, un objectif de l'invention est de fournir un siège pour enfant, qui soit prévu pour s'adapter, facilement et efficacement, à l'évolution morphologique d'un enfant en bas âge, sur une période la plus longue possible.

Notamment, un objectif de l'invention est de fournir un tel siège pour enfant, qui maintienne ce dernier de façon sûre et complète, quelle que soit sa taille, en conservant bien sûr le maximum de confort.

Un autre objectif de l'invention est encore de fournir un tel siège pour enfant, qui soit facile à régler et à manipuler. En particulier, l'invention a pour objectif de permettre une utilisation simple et optimisée (par rapport à la morphologie de l'enfant) de sangles de maintien.

Encore un autre objectif de l'invention est de fournir un tel siège pour enfant, qui soit facile à fabriquer, et qui présente un coût de revient le plus faible possible.

Ces objectifs, ainsi que d'autres qui apparaîtront par la suite, sont atteints selon l'invention à l'aide d'un siège pour enfant, comprenant une embase et un dossier, ledit dossier présentant deux éléments de dossier, correspondant respectivement au côté gauche et au côté droit dudit dossier, se chevauchant partiellement, au niveau de la partie centrale dudit dossier, et mobiles l'une par rapport à l'autre, symétriquement par rapport à un axe vertical correspondant au milieu dudit dossier, de façon à permettre un réglage de la largeur dudit dossier, entre deux positions extrêmes.

Ainsi, selon l'invention, il est possible de régler la largeur du dossier, en fonction de la taille et de la morphologie de l'enfant, de façon simple et efficace. La réalisation et la mise en oeuvre du dossier restent très simples.

Selon une caractéristique avantageuse de l'invention, ledit élément central porte une têtière. Dans ce cas, préférentiellement, le déplacement vertical de ladite têtière commande le réglage de la largeur dudit dossier.

En d'autres termes, il suffit d'une manipulation unique pour régler simultanément la largeur du dossier et la hauteur de la têtière (ces deux aspects évoluant en parallèle, lorsque l'enfant grandit).

Selon un mode de réalisation avantageux de l'invention, ledit dossier comprend un élément central portant au moins un pivot monté sur ledit axe vertical, et pouvant se déplacer dans au moins une lumière ménagée sur un desdits éléments de dossier.

Ce déplacement dans une lumière permet de contrôler aisément et efficacement l'élargissement du dossier.

De façon préférentielle, au moins un desdits pivots coopère avec deux lumières, ménagées respectivement sur l'un et l'autre éléments de dossier. On agit ainsi simultanément et symétriquement sur les deux éléments, avec un nombre réduit de pièces.

Selon une caractéristique avantageuse de l'invention, ladite têtière porte au moins un passage de sangle, recevant et guidant une sangle de maintien de l'enfant.

Ainsi, le réglage de la position de la sangle de maintien est automatique, celle-ci étant toujours bien positionnée par rapport au corps de l'enfant.

Selon un mode de réalisation avantageux, chacun desdits éléments de dossier comprend une lumière principale, débutant sensiblement au niveau dudit axe vertical, et s'éloignant dudit axe vertical en se dirigeant vers la partie supérieure dudit dossier.

Selon un premier mode de réalisation, lesdits éléments de dossier sont articulés l'un par rapport à l'autre, autour d'un pivot placé au voisinage de la partie inférieure du dossier.

Selon un autre mode de réalisation, le siège de l'invention comprend un second jeu de lumières, au voisinage de la partie inférieure du dossier, de façon à limiter le rétrécissement de cette dernière.

Préférentiellement, la partie inférieure de chacun desdits éléments de dossier présente une surface d'appui coopérant avec une surface de butée prévue sur ladite embase, de façon à maintenir, un écartement minimum au niveau de ladite partie inférieure.

Selon un autre aspect de l'invention, il est souhaitable que ladite embase soit également réglable en largeur.

Un siège tel que décrit ci-dessus peut être réalisé de nombreuses façons. Avantageusement, au moins certains des éléments appartenant au groupe comprennent lesdits éléments de dossier, ledit élément central et ladite embase sont des pièces extrudées-soufflées.

Cette technique, rapide et peu coûteuse, est en effet bien adaptée à l'invention.

L'invention peut s'appliquer à de nombreux types de siège pour enfant, et notamment :
- les sièges destinés à être montés dans un véhicule ;
- les sièges de poussettes ou voitures d'enfant ;
- les transats pour enfant ;
- les chaises hautes pour enfant ;
- les chaises de table pour enfant ;
- les réhausseurs de chaise ;
- les supports à langer.

D'autres caractéristiques et avantages de l'invention apparaîtront plus clairement à la lecture de la description suivante d'un mode de réalisation préférentiel de l'invention, donnée à titre de simple exemple illustratif et non limitatif, et des dessins annexés, parmi lesquels :
- la figure 1 illustre, de façon schématique, le principe de fonctionnement d'un mode de réalisation d'un dossier de siège pour enfant selon l'invention ;
- les figures 2A à 2C présentent, en perspective, un siège pour enfant présentant un dossier tel qu'illustré en figure 1, respectivement en :

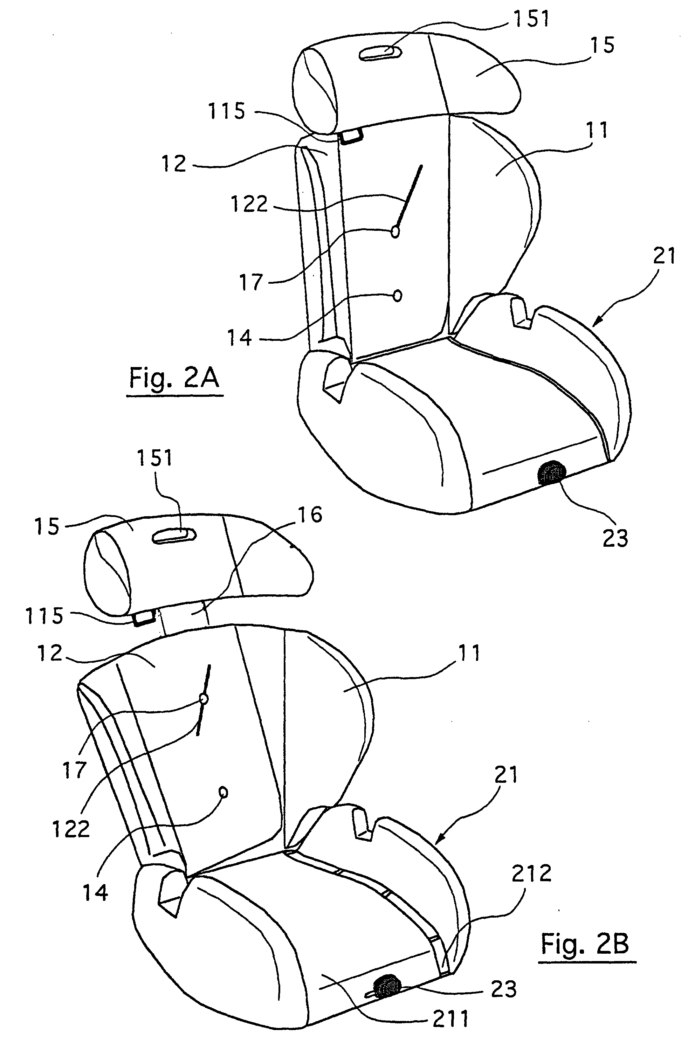

   - figure 2A : position repliée ;
   - figure 2B : position intermédiaire ;

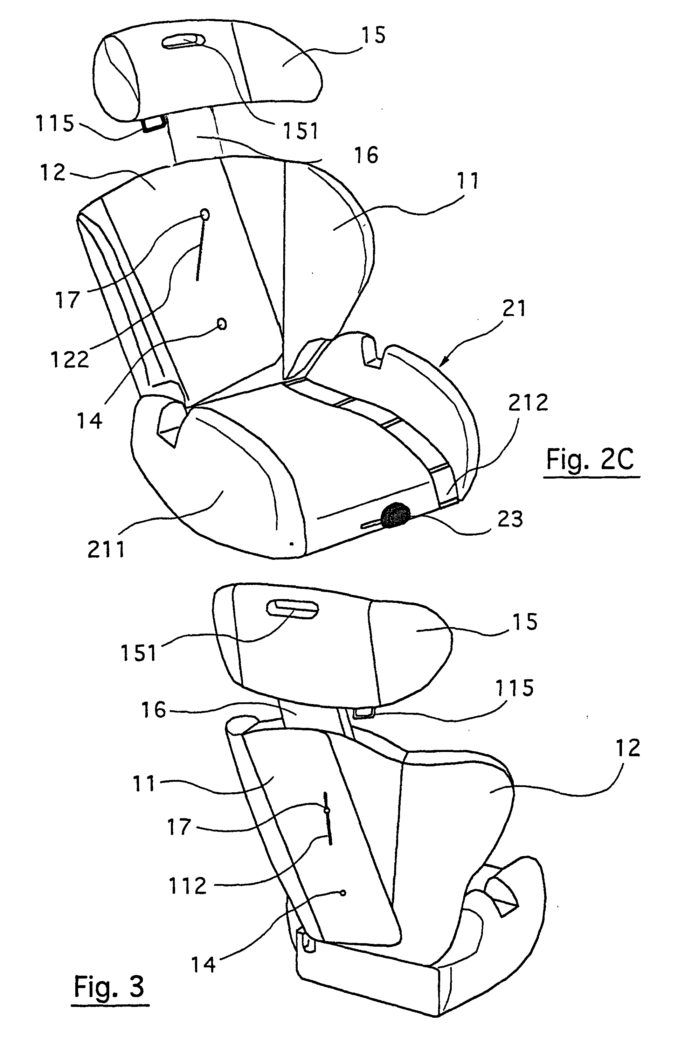

   - figure 2C : position déployée au maximum ;
- la figure 3 présente le siège de la figure 2B, vu de derrière ;

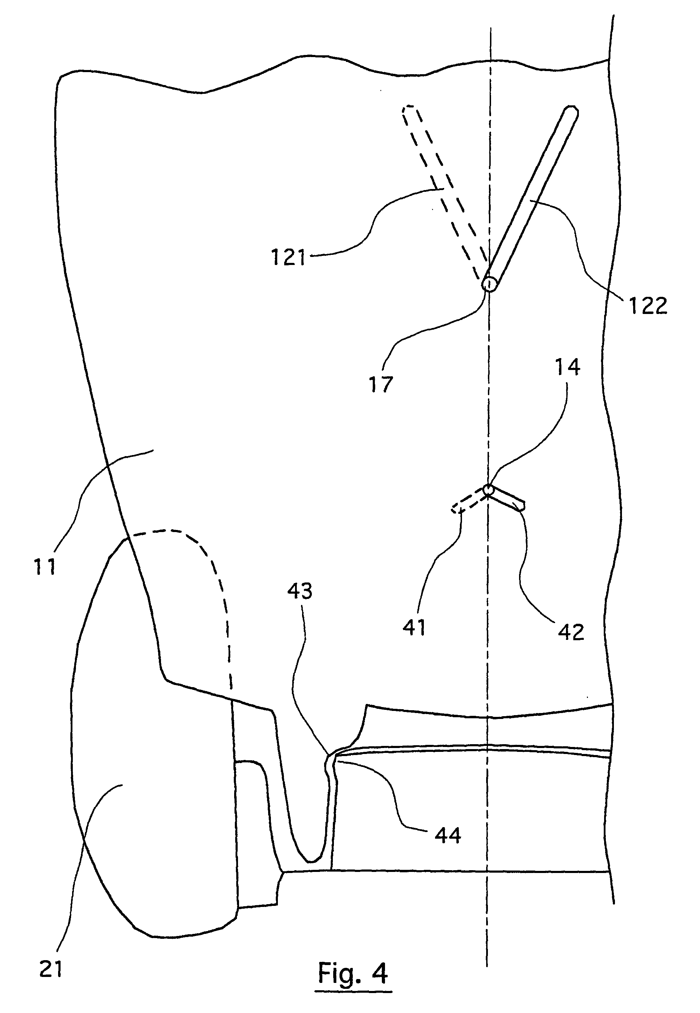

- la figure 4 présente, en détail, la partie inférieure du dossier et la partie correspondante de l'assise, dans un mode de réalisation particulier.

Comme mentionné plus haut, l'invention concerne des sièges pour enfant présentant un dossier dont la largeur est réglable, de façon à tenir compte de l'évolution de la morphologie de l'enfant qui l'utilise.

Cette technique trouve des applications dans de très nombreux types de sièges destinés aux enfants. Le mode de réalisation préférentiel décrit par la suite concerne un siège auto. Il est cependant évident que la même approche peut être adaptée aux autres types de sièges, sans sortir du cadre de l'invention.

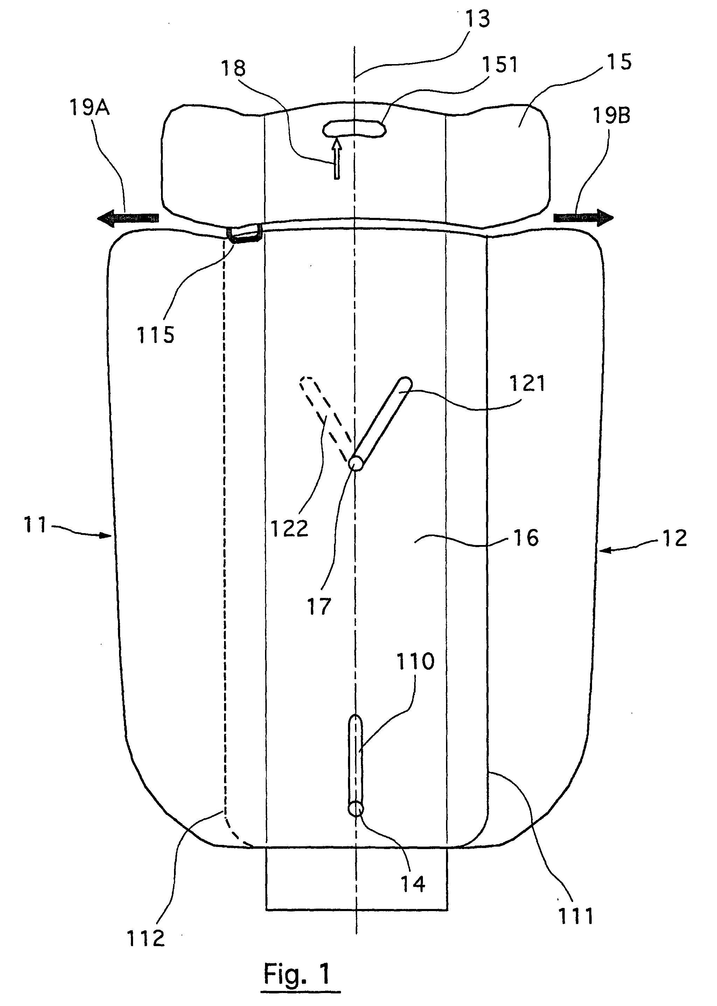

La figure 1 illustre donc, de façon schématique, un dossier d'un siège selon l'invention, vu de derrière.

Le dossier comprend deux éléments principaux, correspondant au côté droit 11 et au côté gauche 12. Ces deux éléments sont sensiblement symétriques par rapport à l'axe 13 correspondant au milieu du dossier.

Ils sont conçus de façon que leurs parties centrales respectives 111 (partie centrale de l'élément 11) et 112 (partie centrale de l'élément 12) puissent coulisser latéralement l'une par rapport à l'autre.

Ils sont solidarisés par un pivot 14 se situant sur l'axe 13. Il présente également une lumière oblongue 110 ménagée selon l'axe 13, dans laquelle peut coulisser le pivot 14. On notera que cette liaison pivot 14/lumière 111 est optionnelle, notamment si le support 16 dispose d'autres moyens de guidage.

Ils présentent par ailleurs chacun une lumière oblongue 121 et 122. Ces lumières oblongues débutent au niveau de l'axe 13, et s'étendent vers la partie supérieure du dossier, en formant un angle avec l'axe 13, vers le côté droit pour l'élément de gauche 12, et vers le côté gauche pour l'élément de droite 11 (lorsque le siège est vu de face).

Le dossier porte encore une têtière 15, montée sur un support 16 coopérant avec les deux éléments de dossier 11 et 12. Ce support 16 porte un second pivot 17, placé sur l'axe 13, prévu pour se déplacer dans les lumières oblongues 121 (formée sur l'élément central 111) et 122 (formée sur l'élément central 112). Préférentiellement, le pivot 14 coopère également avec le support 16 de têtière décrit par la suite.

Lorsque l'on déplace la têtière 15 vers le haut (flèche 18), le pivot 17 se déplace dans les lumières oblongues 121 et 122 (les éléments de dossier étant maintenus par le pivot 14), ce qui entraîne l'écartement de la partie supérieure du dossier (flèches 19A et 19B).

En d'autres termes, il suffit de déplacer la têtière pour modifier la largeur du dossier. Il s'agit donc d'une manipulation très simple, et particulièrement avantageuse. En effet, en une seule opération, on adapte le siège à la taille (têtière) et à la largeur d'épaules (côtés du dossier), sachant que ces deux aspects sont morphologiquement liés.

Ce fonctionnement est illustré par les figures 2A à 2C, qui présentent un siège selon l'invention (sans son revêtement, de façon à ce que l'on visualise mieux la cinématique). La figure 3 montre le siège de la figure 2B, vu de derrière. On distingue, sur cette figure, les deux éléments de dossier 11 et 12, qui peuvent coulisser l'un dans l'autre autour du pivot 14, sous le contrôle du pion 17, lui-même actionné par le déplacement de la têtière.

Sur la figure 2A, le dossier est dans sa position repliée, correspondant à la plus petite taille de l'enfant. La têtière 15 est alors en contact avec le haut du dossier, et le pion 17 se trouve au bas des lumières oblongues 121 et 122.

A la figure 2B, on a relevé la têtière 15 jusqu'à une position intermédiaire. La têtière 15 peut porter une poignée 151, facilitant son réglage. Le pion 17 se trouve donc à une position intermédiaire de la lumière oblongue 122. On constate alors clairement que le dossier s'est "ouvert", et qu'il est donc adapté à un enfant plus large, par rapport au siège de la figure 2A.

Enfin, sur la figure 2C, on présente le siège dans sa position déployée maximale. Le pion 17 se trouve alors dans la position supérieure extrême de la lumière oblongue 122. Le dossier est encore plus élargi, et la têtière se trouve encore plus haut que dans le cas de la figure 2B.

En revenant à la figure 1, on notera que la têtière porte avantageusement un (ou deux) guide-sangle 115 prévu pour recevoir la sangle de maintien de l'enfant. Ainsi, aucun réglage spécifique du guide-sangle n'est nécessaire, lorsque l'on modifie la forme du dossier et la position de la têtière. En effet, si le dossier est adapté à la morphologie de l'enfant, la sangle sera systématiquement placée à la position adéquate au niveau de son épaule.

Avantageusement, l'assise 21 (figures 2A à 2C) est également réglable en largeur. Elle peut par exemple être réalisée sous la forme de deux parties 211 et 212 pouvant coulisser l'une dans l'autre, sous l'action d'une crémaillère ou d'un pas de vis, contrôlé par la molette 23 placée sur la face avant de l'assise.

La figure 4 est un détail de la partie inférieure du dossier, dans une variante de réalisation.

Selon cette variante, le pivot 14 coopère avec deux lumières oblongues 41 et 42 réalisées respectivement sur chacun des éléments de dossier 11 et 12.

Ces deux lumières débutent au niveau de l'axe vertical 13, et s'éloignent de ce dernier en se dirigeant vers l'assise. Les deux lumières oblongues 41 et 42 offrent un déplacement très restreint, par rapport à celui permis par les lumières oblongues 121 et 122. Elles permettent d'éviter que la partie inférieure du dossier devienne trop étroite, lorsque le dossier se trouve en position déployée.

Pour cela, chaque élément de dossier comprend une butée 43, qui vient forcer contre une zone d'appui correspondante 44 de l'assise. Les matériaux utilisés sont choisis pour permettre un tel jeu.

De nombreuses variantes de réalisation de l'invention peuvent être envisagées. Notamment :
- la mise en place de pivots et des lumières peut être inversée (les lumières étant réalisées sur le support 16 de la têtière) ;
- les formes des lumières peuvent être adaptées (elles ne sont pas obligatoirement rectilignes) ;
- le pivot 17 peut être dédoublé (un pivot pour chaque lumière) ;
- plus généralement, d'autres moyens que les lumières peuvent être envisagés pour contrôler le déplacement des éléments du dossier (par exemple à base de biellettes) ;
- un réglage indépendant de la têtière peut être prévu pour l'écartement du dossier ;
- la mollette de réglage de l'assise peut, par un système de renvoi, contrôler également la largeur du dossier et/ou la position de la têtière ;
- ...

La réalisation d'un dossier réglable selon l'invention est particulièrement simple et facile à mettre en oeuvre. Notamment, elle présente un nombre limité de pièces. Ce dossier peut donc être réalisé à un coût relativement faible.

Avantageusement, les différentes pièces (éléments du dossier, éléments de l'assise, têtière (éléments monobloc comprenant son support) sont des pièces obtenues par extrusion-soufflage.

Bien que l'exemple de réalisation donné concerne un siège pour véhicule automobile, il est clair que l'invention concerne tous les types de sièges pouvant être utilisés dans le domaine de la puériculture, et notamment pour :
- les sièges destinés à être montés dans un véhicule ;
- les sièges de poussettes ou voitures d'enfant ;
- les transats pour enfant ;
- les chaises hautes pour enfant ;
- les chaises de table pour enfant ;
- les réhausseurs de chaise ;
- les supports à langer ;
- ...

## Revendications

1. Siège pour enfant, comprenant une embase (21) et un dossier, **caractérisé en ce que** ledit dossier présente deux éléments de dossier (11, 12), correspondant respectivement au côté gauche et au côté droit dudit dossier, se chevauchant partiellement, au niveau de la partie centrale dudit dossier, et mobiles l'une par rapport à l'autre, symétriquement par rapport à un axe vertical (13) correspondant au milieu dudit dossier, de façon à permettre un réglage de la largeur dudit dossier, entre deux positions extrêmes.

2. Siège pour enfant selon la revendication 1, **caractérisé en ce que** ledit élément central (16) porte une têtière (15).

3. Siège pour enfant selon la revendication 2, **caractérisé en ce que** le déplacement vertical de ladite têtière (15) commande le réglage de la largeur dudit dossier.

4. Siège pour enfant selon l'une quelconque des revendications 1 à 3, **caractérisé en ce que** ledit dossier comprend un élément central (16) portant au moins un pivot (17, 14) monté sur ledit axe vertical (13), et pouvant se déplacer dans au moins une lumière (121, 122, 110, 41, 42) ménagée sur un desdits éléments de dossier (11, 12).

5. Siège pour enfant selon la revendication 4, **caractérisé en ce qu'**au moins un desdits pivots (17) coopère avec deux lumières (121, 122), ménagées respectivement sur l'un et l'autre éléments de dossier.

6. Siège pour enfant selon l'une quelconque des revendications 4 et 5, **caractérisé en ce que** ladite têtière (15) porte au moins un passage de sangle ( 115), recevant et guidant une sangle de maintien de l'enfant

7. Siège pour enfant selon l'une quelconque des revendications 2 à 6, **caractérisé en ce que** chacun desdits éléments de dossier (11,12) comprend une lumière principale (121, 122), débutant sensiblement au niveau dudit axe vertical (13), et s'éloignant dudit axe vertical en se dirigeant vers la partie supérieure dudit dossier.

8. Siège pour enfant selon l'une quelconque des revendications 2 à 7, **caractérisé en ce que** lesdits éléments de dossier (121, 122) sont articulés l'un par rapport à l'autre, autour d'un pivot (14) placé au voisinage de la partie inférieure du dossier.

9. Siège pour enfant selon l'une quelconque des revendications 2 à 7, **caractérisé en ce qu'**il comprend un second jeu de lumières (41, 42), au voisinage de la partie inférieure du dossier, de façon à limiter le rétrécissement de cette dernière.

10. Siège pour enfant selon l'une quelconque revendications 1 à 9, **caractérisé en ce que** la partie inférieure de chacun desdits éléments de dossier présente une surface d'appui (43) coopérant avec une surface de butée (44) prévue sur ladite embase, de façon à maintenir, un écartement minimum au niveau de ladite partie inférieure.

11. Siège pour enfant selon l'une quelconque des revendications 1 à 10, **caractérisé en ce que** ladite embase (21) est également réglable en largeur.

12. Siège pour enfant selon l'une quelconque des revendications 1 à 11, **caractérisé en ce qu'**au moins certains des éléments appartenant au groupe comprennent lesdits éléments de dossier, ledit élément central et ladite embase sont des pièces extrudées-soufflées.

13. Siège pour enfant selon l'une quelconque des revendications 1 à 12, **caractérisé en ce qu'**il appartient au groupe comprenant :
- les sièges destinés à être montés dans un véhicule ;
- les sièges de poussettes ou voitures d'enfant ;
- les transats pour enfant ;
- les chaises hautes pour enfant ;
- les chaises de table pour enfant ;
- les réhausseurs de chaise ;
- les supports à langer.

## Patentansprüche

1. Kindersitz, welcher eine Sitzfläche (21) und eine Rückenlehne umfasst, **dadurch gekennzeichnet, dass** diese Rückenlehne zwei Elemente (11, 12) aufweist, die jeweils der linken und der rechten Seite der Rückenlehne entsprechen und die sich teilweise in der Mitte der Rückenlehne überdecken und symmetrisch im Verhältnis zu einer der Mitte der Rückenlehne entsprechenden senkrechten Achse (13) gegeneinander beweglich sind, um das Einstellen der Breite dieser Rückenlehne zwischen zwei Extremstellungen zu ermöglichen.

2. Kindersitz nach Anspruch 1, **dadurch gekennzeichnet, dass** das mittlere Element (16) eine Kopfstütze (15) trägt.

3. Kindersitz nach Anspruch 2, **dadurch gekennzeichnet, dass** die senkrechte Bewegung der Kopfstütze (15) die Breiteneinstellung der Rückenlehne steuert.

4. Kindersitz nach einem der Ansprüche 1 bis 3, **dadurch gekennzeichnet, dass** die Rückenlehne ein mittleres Element (16) aufweist, welches mindestens einen auf der senkrechten Achse (13) angebrachten Drehzapfen (17, 14) aufweist, der mindestens in einem in einem der Rückenlehnenelemente (11, 12) befindlichen Schlitz (121, 122, 110, 41, 42) gleiten kann.

5. Kindersitz nach Anspruch 4, **dadurch gekennzeichnet, dass** mindestens einer der Drehzapfen (17) mit zwei Schlitzen (121, 122) zusammenwirkt, welche jeweils in dem einen und dem anderen Rückenlehnenelement angebracht sind.

6. Kindersitz nach einem der Ansprüche 4 oder 5, **dadurch gekennzeichnet, dass** die Kopfstütze (15) mindestens einen Durchgang für einen Riemen (115) aufweist, der einen Halteriemen für das Kind aufnimmt und führt.

7. Kindersitz nach einem der Ansprüche 2 bis 6, **dadurch gekennzeichnet, dass** jedes Rückenlehnenelement (11, 12) einen Hauptschlitz (121, 122) aufweist, der in etwa auf der Höhe der vertikalen Achse (13) anfängt und sich von der vertikalen Achse entfernt, wobei er sich zum oberen Teil der Rückenlehne hin erstreckt.

8. Kindersitz nach einem der Ansprüche 2 bis 7, **dadurch gekennzeichnet, dass** die Rückenlehnenelemente (121, 122) drehbar gegeneinander um einen in der Nähe des unteren Teils der Rückenlehne angebrachten Drehzapfen (14) montiert sind.

9. Kindersitz nach einem der Ansprüche 2 bis 7, **dadurch gekennzeichnet, dass** er einen zweiten Satz von Schlitzen (41, 42) in der Nähe des unteren Teils der Rückenlehne aufweist, um das Verengen der Rückenlehne einzuschränken.

10. Kindersitz nach einem der Ansprüche 1 bis 9, **dadurch gekennzeichnet, dass** der untere Teil eines jeden der Rückenlehnenelemente eine Stützfläche (43) aufweist, die mit einer am Sitz befindlichen Anschlagfläche (44) zusammenwirkt, um auf der Höhe des unteren Teils eine minimale Abstandsbreite einzuhalten.

11. Kindersitz nach einem der Ansprüche 1 bis 10, **dadurch gekennzeichnet, dass** die Breite des Sitzes (21) ebenfalls einstellbar ist.

12. Kindersitz nach einem der Ansprüche 1 bis 11, **dadurch gekennzeichnet, dass** mindestens bestimmte Elemente aus der von den Rückenlehnenelementen, dem mittleren Element und dem Sitz gebildeten Gruppe extrusionsgeblasene Teile sind.

13. Kindersitz nach einem der Ansprüche 1 bis 12, **dadurch gekennzeichnet, dass** er der folgenden Gruppe angehört:
- Sitze zum Einbau in einem Fahrzeug;
- Sitze für Kinderwagen oder Kinderbuggys;
- Liegesitze für Kinder;
- Kinderhochstühle;
- Tischsitze für Kinder;
- Elemente zum Erhöhen von Stühlen;
- Unterlagen zum Windeln.

## Claims

1. Child's seat, comprising a base (21) and a backrest, **characterized in that** the said backrest has two backrest elements (11, 12) corresponding respectively to the left hand side and the right hand side of the said backrest, partially overlapping in the region of the central part of the said backrest and movable with respect to each other symmetrically with respect to a vertical axis (13) corresponding to the middle of the said backrest, so as to enable the width of the said backrest to be adjusted between two extreme positions.

2. Child's seat according to claim 1, **characterised in that** the said central element (16) carries a headrest (15).

3. Child's seat according to claim 2, **characterised in that** the vertical movement of the said headrest (15) controls the adjustment of the width of the said backrest.

4. Child's seat according to any one of claims 1 to 3, **characterised in that** the said backrest comprises a central element (16) carrying at least one pivot (17, 14) mounted on the said vertical axis (13) and being capable of moving in at least one opening (121, 122, 110, 41, 42) provided on one of the said backrest elements (11, 12).

5. Child's seat according to claim 4, **characterised in that** at least one of the said pivots (17) cooperates with two openings (121, 122) provided respectively on one or other of the backrest elements.

6. Child's seat according to either of claims 4 or 5, **characterised in that** the said headrest (15) carries at least one passage for a strap (115), receiving and guiding a strap for holding the child.

7. Child's seat according to any one of claims 2 to 6, **characterised in that** each of the said backrest elements (11, 12) includes a principal opening (121. 122), starting substantially in the region of the said vertical axis (13) and separating away from the said vertical axis while being directed towards the upper part of the said backrest.

8. Child's seat according to any one of claims 2 to 7, **characterised in that** the said backrest elements (121, 122) are articulated with respect to each other about a pivot (14) placed in the vicinity of the lower part of the backrest.

9. Child's seat according to any one of claims 2 to 7, **characterised in that** it includes a second set of openings (41, 42) in the vicinity of the lower part of the backrest, so as to limit the narrowing of the latter.

10. Child's seat according to any one of claims 1 to 9, **characterised in that** the lower part of each of the said backrest elements has a supporting surface (43) cooperating with a stop surface (44) provided on the said base so as to maintain a minimum separation in the region of the said lower part.

11. Child's seat according to any one of claims 1 to 10, **characterised in that** the said base (21) can also be adjusted in width.

12. Child's seat according to any one of claims 1 to 11, **characterised in that** at least some of the elements belonging to the group comprising the said backrest elements, the said central element and the said base are blow-extruded parts.

13. Child's seat according to any one of claims 1 to 12, **characterised in that** it belongs to the group comprising :
- seats designed to be mounted in a vehicle;
- seats for push-chairs or children's cars;
- deckchairs for children;
- highchairs for children;
- table chairs for children;
- seat boosters;
- baby-changing supports.
